# EUROPEAN PATENT APPLICATION

(11) **EP 4 721 946 A1**
(43) Date of publication of application: **08.04.2026**
(21) Application number: 24204690.2
(22) Date of filing: 04.10.2024
(51) Int. Cl.: B29C 43/18, F16J 15/10, B29C 35/02

(54) **METHOD FOR PRODUCING A FLAT ELASTOMER SEAL AND ASSOCIATED FLAT ELASTOMER SEAL**

(71) Applicant: Trelleborg Sealing Solutions Germany GmbH, 70565 Stuttgart (DE)
(72) Inventor: KUBAJEWSKI, Grzegorz, 43-300 Bielsko-Biala (PL); SZCZYGIEL, Mateusz, 43-300 Bielsko-Biala (PL); PAWELEK, Krysztof, 43-300 Bielsko-Biala (PL); JEDREJOWSKI, Jacek, 43-300 Bielsko-Biala (PL); MALEC, Michal, 34-340 Jelesnia (PL); WITKOWSKI, Bartosz, 43-300 Bielsko-Biala (PL); ANDERSSON, Jonas Karl-Gustaf, 39350 Kalmar (SE); HEIZMANN, Michael, 70565 Stuttgart (DE); OHMER, Jonas, 70865 Rohrbach (DE); HAUSER, Daniel, 70865 Rohrbach (DE)
(74) Representative: Kohler Schmid Möbus Patentanwälte

(57) **Abstract**

A method for producing a flat elastomer seal (1) having a carrier sheet (2) which is covered by highly vulcanized elastomer material (3) on at least one side, according to the invention, comprises the following steps:
- providing at least one flat material sandwich (7) formed by a carrier sheet (2) and at least one slightly vulcanized elastomer layer (8; 8a, 8b) attached to at least one side of the carrier sheet (2), in particular two slightly vulcanized elastomer layers (8a, 8b) each attached to one of the two sides of the carrier sheet (2); and
- compression molding of the material sandwich (7) in a mold (9) which has a mold cavity (10) corresponding to the shape of the seal (1) to be produced, by applying heat (T) and pressure (p) to the at least one slightly vulcanized elastomer layer (8a, 8b) to allow the elastomer material to flow and fill the mold cavity (10) and to increase the vulcanization of the elastomer material to a higher degree in order to obtain a highly vulcanized elastomer material (3).

## Description

The present invention relates to a method for producing a flat elastomer seal having a carrier sheet which is covered by highly vulcanized elastomer material on at least one of its two sides. The present invention also relates to a flat elastomer seal produced by such a method.

Elastomer seals are well known, e.g. from DE 10 2005 013 813 A1, DE 20 2007 009 319 U1, DE 10 2018 204 085 A1, DE 10 2021 207 208 , EP 4 286 714A1 A1, FR 2 659 122, US 1,986,465, US 3,175,832, US 3,231,289, US 3,438,117, US 3,738,670, US 5,149,109, US 5,161,808A, US 5,236,203, US 12,066,104 B2, US 2020/0340584 A1 and WO 2021/043833 A1. Usually, elastomer seals are produced in an injection molding process.

It is the object of the invention to specify an alternative production method for flat elastomer seals which enables complex geometries, e.g. sealing beads, flow channels, recessions, protrusions, different rubber layer thicknesses, steps, etc.

This object is solved, in accordance with the invention, by a method comprising the following steps:
- providing at least one flat material sandwich formed by a carrier sheet and at least one slightly vulcanized elastomer layer attached to at least one side of the carrier sheet, in particular two slightly vulcanized elastomer layers each attached to one side of the carrier sheet; and
- compression molding of the material sandwich in a mold which has a mold cavity corresponding to the shape of the seal to be produced by applying heat and pressure to the at least one slightly vulcanized elastomer layer to allow the elastomer material to flow and fill the mold cavity and to increase the vulcanization of the elastomer material to a higher grade in order to obtain a highly vulcanized elastomer material.

Preferably, the carrier sheet is a flat piece of material, of equal thickness everywhere, bounded on two opposite main sides by a flat surface that is very extensive in relation to the thickness. In one embodiment, a slightly vulcanized elastomer layer is attached to one of the two main sides of the carrier sheet, and in another embodiment, two slightly vulcanized elastomer layers are each attached to one of the two opposing main sides of the carrier sheet.

According to the invention, the flat material sandwich is prepared and afterwards compression-molded to further vulcanize the elastomer material and produce the final sealing geometry. The production method allows better handling of very thin seals with complex features by having a carrier sheet (thin reinforcement layer) in between and different rubber thicknesses on both sides of the carrier sheet. In case of two slightly vulcanized elastomer layers, the thickness of the two elastomer layers can have the same or different and the two elastomer layers can be made of different elastomer material.

Preferably, the carrier sheet comprises metal, plastics, fabrics, composites, a combination thereof or any other material, which acts as structural and mechanical carrier for elastomer layer(s). Advantageously, the carrier sheet is a stainless steel sheet or an aluminium sheet. The elastomer material can consist of different materials, fillers and additives, as well as mixtures of, for example, thermoplastic and elastomeric materials, even with only a small proportion of elastomeric material. In principle, all materials and mixtures that can be vulcanized. Even with different layers of the individual elastomer layers on top of each other.

Preferably, the elastomer material of the at least one slightly vulcanized elastomer layer is vulcanized only to a degree of less than 20%, in particular less than 10%, and the highly vulcanized elastomer material is vulcanized to a degree of more than 50%, in particular more than 80%. The degree of vulcanization is the result of extensive simulative and experimental investigations and is particularly important to ensure process feasibility and process quality, thus enabling production of the flat seal. The degree of the slightly vulcanized elastomer layer must not be exceeded, otherwise the flow behavior and the mold filling behavior will be negatively affected. The degree of the highly vulcanized elastomer material must not be undercut, otherwise the stability and the quality and the sealing ability will be negatively affected.

As the thickness of the elastomer layers changes during vulcanization, the thickness of the at least one slightly vulcanized elastomer layer is preferably chosen such that the amount of slightly vulcanized elastomer material corresponds to the amount of highly vulcanized elastomer material of the compression-molded seal. In real process, the amount of slightly vulcanized material always exceeds the amount of highly vulcanized material or in other words exceeds the rubber volume of cavity.

Preferably, at the end of compression-molding, the carrier sheet(s) is (are) fully covered by the highly vulcanized elastomer material in order to protect the carrier sheet against corrosion and electric conductivity.

Preferably, before compression molding, the geometry of the material sandwich, in particular an outer contour and/or an inner contour, is shaped by punching, stamping, cutting, forming, pressing or deep drawing the material sandwich.

In an embodiment according to the invention, the geometry of the flat seal can also be shaped, preferably by compression molding, for example by embossing, molding, pressing or deep-drawing the material sandwich, in particular the at least one carrier sheet with elastomer material.

Preferably, compression molding comprises forming at least one three-dimensional structure, in particular at least one sealing structure, in the elastomer material. Compression molding enables to form complex shapes (e.g. sealing beads etc.) in the elastomer material. A wide variety of sealing structures, for example annular and/or closed sealing structures, can be molded into the elastomer material, which extend along an outer and/or inner circumferential edge of the material sandwich and/or are located in areas in the material sandwich.

In a further variant, the method comprises:
- arranging at least two flat material sandwiches next to each other in the mold with their carrier sheets being in direct contact with each other and/or spaced apart from each other, and
- compression molding of the at least two flat material sandwiches in the mold by applying heat and pressure to the slightly vulcanized elastomer layers of the at least two flat material sandwiches to allow the elastomer material to flow and fill the mold cavity, thereby connecting the carrier sheets to each other by means of elastomer material, and to increase the vulcanization of the elastomer material to a higher grade in order to obtain the highly vulcanized elastomer material.

Preferably, the carrier sheets are irreversibly bonded by the use of elastomer material. This means that after compression molding, the carrier sheets cannot be separated from each other again without causing damage.

Advantageously, a flat elastomer seal can be composed by a plurality of flat material sandwiches without highly reduced waste which has to be removed later on. In case of a frame-shaped seal, the seal can be composed of e.g. four L-shaped material sandwiches which reduces waste compared to a conventional frame-shaped seal in which the frame opening must be cut out.

Preferably, the carrier sheets of the flat material sandwiches are arranged in the mold engaging each other, in particular by means of a form-fitting connection, e.g. a puzzle-shaped connection.

If required, the compression-molded seal can be further heated outside of the mold to further increase the grade of vulcanization of the highly vulcanized elastomer material.

Optionally, the method according to the invention further comprises:
- adding or injecting slightly vulcanized or unvulcanized elastomer material to the mold, e.g. for connecting at least two flat material sandwiches to each other and/or for forming at least one sealing structure in the elastomer material, and/or
- arranging additional parts (e.g. membranes, structural frames, metal inserts etc.) of the flat elastomer seal to be produced, in the mold for connecting to the material sandwich(es) during the compression molding.

For producing the flat material sandwich, the method preferably comprises the following steps:
- producing the at least one slightly vulcanized elastomer layer in a calendering or preforming process; and
- attaching the at least one slightly vulcanized elastomer layer to at least one side of the carrier sheet in a rolling or pressing process, in particular attaching two slightly vulcanized elastomer layers each to at least one side of the carrier sheet in a rolling or pressing process.

In a further aspect, the invention also relates to the elastomer seal produced by the above method. In a preferred embodiment, the highly vulcanized elastomer material forms a flat seal and/or comprises at least one three-dimensional structure, in particular at least one sealing structure.

In an advantageous embodiment, the seal comprises at least two carrier sheets next to each other which are in direct contact with each other and/or spaced apart from each and which are connected to each other by means of the highly vulcanized elastomer material. Preferably, the carrier sheets engage each other, in particular by a form-fitting connection.

In an advantageous embodiment, the at least two carrier sheets can transmit an electric current if they are in direct contact or can insulate an electric potential if they are not in direct contact. In an advantageous embodiment, there is also at least one area of the carrier sheets that is electrically conductive to the housing. The electrical conductivity or insulation can be realized by electrically conductive or insulating elastomer, electrically conductive inserts, by direct contact of the conductive carrier sheet with the housing or electrical insulating layers.

In an advantageous embodiment, the at least one carrier sheet is under tension in mounted state so that it provides force in the direction of the surfaces to be sealed in order to increase the contact pressure in the sealing contact and, for example, to improve the sealing performance, to achieve a spring effect or to improve the followability of the seal to the sealing surface.

In an advantageous embodiment, the seal comprises at least two carrier sheets that are spaced apart from one another and that are connected to one another by the highly vulcanized elastomer material. Preferably, the distance between the carrier sheets can be used to achieve flexibility so that larger tolerances can be compensated for assembly. The distance between the at least two carrier sheets is preferably less than 30 mm, particularly preferably less than 20 mm. If the distance of the carrier sheets is too large, the advantageous properties of the carrier sheets are reduced, which has negative effects on the flat seal.

In an advantageous embodiment, at least one predetermined breaking point is provided in the carrier sheets, in the contact area of the carrier sheets and/or in the elastomer, which opens when a defined excess pressure of sealed room is exceeded, so that the pressure in the sealed room can be reduced.

In an advantageous embodiment, functional elements with special functional properties can be provided in the carrier sheets, in the contact area of the carrier sheets and/or in the elastomer. For example, at least one ventilation area can be provided in the carrier sheets, in the contact area of the carrier sheets and/or in the elastomer, which is used to balance the pressure between the sealed room and the environment.

In an advantageous embodiment, the flat seal comprises at least two carrier sheets, which are connected by an at least three-dimensional structure, and the at least one three-dimensional structure is closed on the at least two carrier sheets, so that it provides at least one circumferential sealing structure.

In an advantageous embodiment, the flat seal comprises at least two carrier sheets, which are stacked. The at least two carrier sheets can be in contact or spaced apart from each other. By stacking carrier sheets, for example, a higher structure, adapted stiffness of the flat seal or different propertiescan be achieved.

Further advantages of the invention will become apparent from the description and the drawing. The embodiments shown and described are not to be understood as being exhaustive but instead is of an exemplary nature for describing the invention.

In the drawings:
- Fig. 1: shows a perspective view of a flat elastomer seal according to the invention having one carrier sheet;
- Fig. 2: shows a cross section view of the elastomer seal according to II-II in Fig. 1;
- Figs. 3a-3d: show schematically a method for producing a flat elastomer seal according to the invention;
- Figs. 4a-4d: show schematically another method for producing a flat elastomer according to the invention;
- Figs. 5a, 5b: show a top view of a plurality of flat material sandwiches side by side and engaging each other with the upper slightly vulcanized elastomer layer not shown (Fig. 5a) and a flat elastomer seal (Fig. 5b) produced from the plurality of flat material sandwiches according to the invention; and
- Figs. 6a, 6b: show a top view of a plurality of flat material sandwiches side by side and connected to each other in a form-fitting manner (Fig. 6a) with the upper slightly vulcanized elastomer layer not shown and a flat elastomer seal (Fig. 6b) produced from the plurality of flat material sandwiches according to the invention; and
- Fig. 7: shows a detail view of a flat elastomer seal according to the invention.

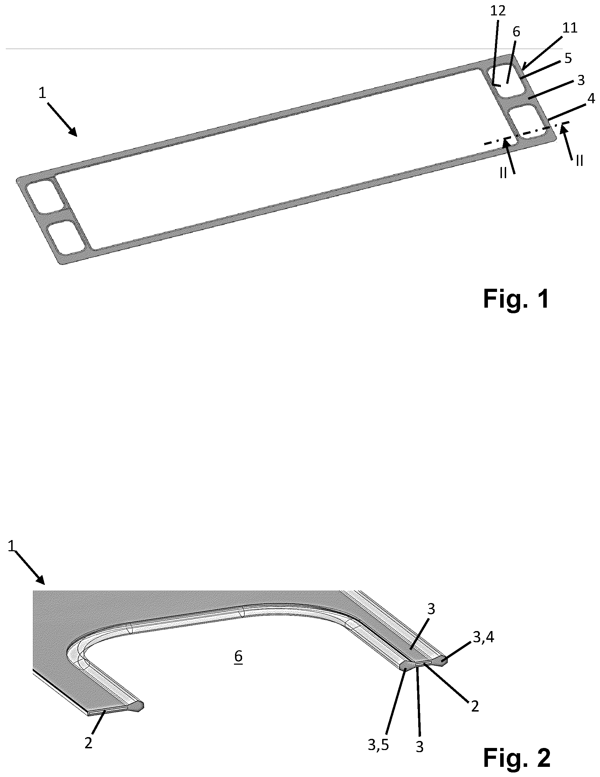

**Figs. 1 and 2** show a flat elastomer seal 1 comprising a carrier sheet 2 and a highly vulcanized elastomer material (e.g. FKM) 3. The carrier sheet 2 is fully covered by the highly vulcanized elastomer material 3 which is vulcanized to a degree of more than 50%, preferably more than 80%. For example, the carrier sheet 2 can be a stainless steel sheet or alternatively a sheet of plastics, fabrics, composites, a combination thereof or any other material, which act as structural and mechanical carrier for elastomer material.

Optionally, the highly vulcanized elastomer material 3 comprises at least one three-dimensional structure in the elastomer material, such as an annular or closed outer sealing structure **4** extending along an outer circumferential edge of the elastomer seal 1 and/or one or more inner sealing structures **5** each extending e.g. along an inner circumferential edge of an opening **6** in the elastomer seal 1.

For example, the sealing structure 4, 5 can have a maximum height of 5 mm, preferably a maximum height of 2 mm.

In a thin elastomer seal, the total thickness (including the highly vulcanized elastomer material 3) of the elastomer seal 1 can be approx. 0.3mm out of three-dimensional structures and approx. 0.8mm within three-dimensional structures.

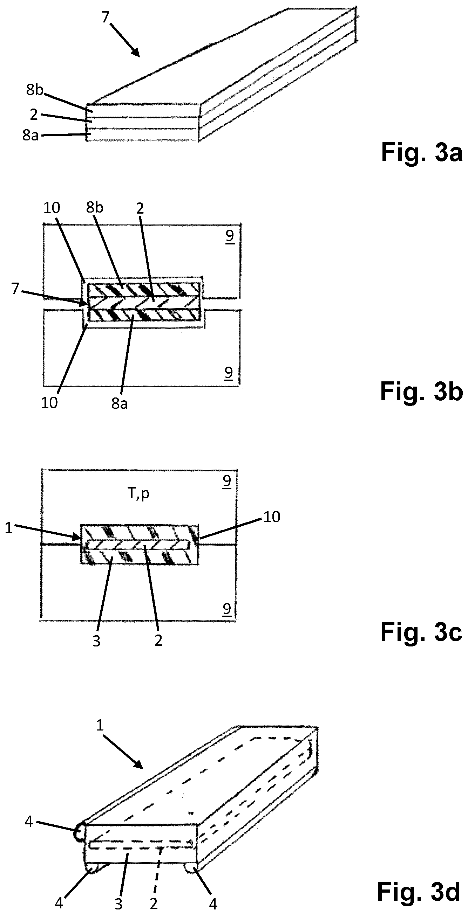

**Figs. 3a-3d** show the steps of a method according to the invention for producing the flat elastomer seal 1.

First, as shown in **Fig. 3a****,** a flat material sandwich **7** is provided which is formed by the carrier sheet 2 (thickness: e.g. 0,1-2,0mm) and two slightly vulcanized elastomer layers **8a, 8b** (thickness: e.g. 0,15-5,0mm) attached to different sides of the carrier sheet 2. Preferably, the elastomer material of the slightly vulcanized elastomer layers 8a, 8b is vulcanized only to a degree of less than 20%, in particular less than 10%. The slightly vulcanized elastomer layers 8a, 8b can be produced in a calendering or preforming process and attached to one of the two sides of the carrier sheet 2 in a rolling or pressing process.

Next, as shown in **Fig. 3b****,** the material sandwich 7 is arranged in a mold **9** which has a mold cavity **10** corresponding to the shape of the seal 1 to be produced. Then, by applying heat **T** and pressure **p** to the slightly vulcanized elastomer layers 8a, 8b, the material sandwich 7 is compression molded **(****Fig. 3c****)** to allow the elastomer material to flow and fill the mold cavity 10 and to increase the vulcanization of the elastomer material to a higher grade in order to obtain the highly vulcanized elastomer material 3. Preferably, the thickness of the slightly vulcanized elastomer layers 8a, 8b is chosen such that the amount of slightly vulcanized elastomer material corresponds to the amount of the highly vulcanized elastomer material 3 required for the compression-molded seal 1. Especially in case that the carrier sheet 2 is made from metal, after compression molding, the carrier sheet 2 is advantageously fully covered by the highly vulcanized elastomer material 3 to protect the metal against corrosion.

Finally, as shown in **Fig. 3d****,** the compression-molded seal 1 is removed from the mold 9 and can optionally be further heated e.g. in an oven to increase the vulcanization of the highly vulcanized elastomer material 3 to a higher grade.

For example, a produced material sandwich 7 has a carrier sheet 2 of 0.3mm and two slightly vulcanized elastomer layers 8a, 8b of 0.15mm, i.e. a total thickness of 0.6mm. After compression molding it most likely will be still 0.6mm with the sealing structure 4, 5 protrude 0.1 mm and the main elastomer thickness be reduced to as low as 0.05mm.

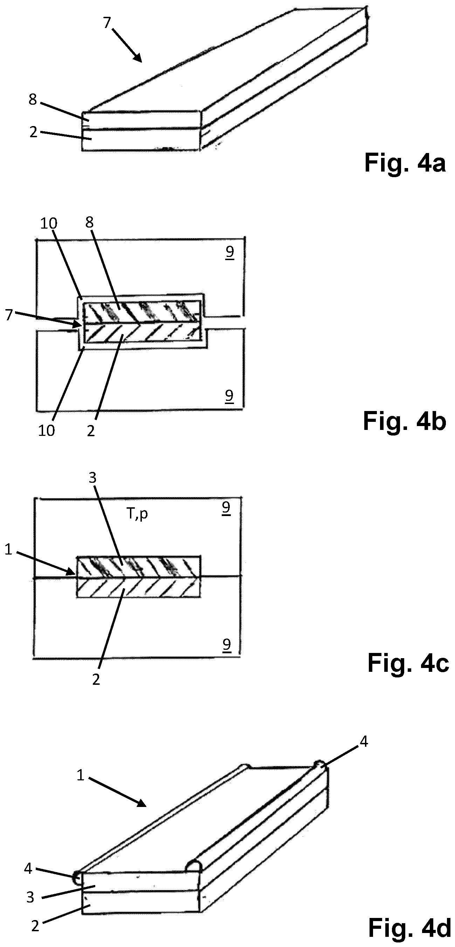

**Figs. 4a-4d** show the steps of another method according to the invention for producing the flat elastomer seal 1.

First, as shown in **Fig. 4a****,** a flat material sandwich 7 is provided which is formed by the carrier sheet 2 and one slightly vulcanized elastomer layer **8** attached to one of the two sides of the carrier sheet 2.

Next, as shown in **Fig. 4b****,** the material sandwich 7 is arranged in the mold 9.

Then, by applying heat T and pressure p to the slightly vulcanized elastomer layer 8, the material sandwich 7 is compression-molded **(****Fig. 3c****)** to allow the elastomer material to flow and fill the mold cavity 10 and to further increase the vulcanization of the elastomer material to a higher grade in order to obtain the highly vulcanized elastomer material 3. Preferably, the thickness of the slightly vulcanized elastomer layer 8 is chosen such that the amount of slightly vulcanized elastomer material corresponds to the amount of the highly vulcanized elastomer material 3 required for the compression-molded seal 1.

Finally, as shown in **Fig. 4d****,** the compression-molded seal 1 is removed from the mold 9 and can optionally be further heated e.g. in an oven to increase the vulcanization of the highly vulcanized elastomer material 3 to a higher grade.

As shown in Figs. 3d and 4d, compression molding can optionally comprise forming one or more three-dimensional structures 11, e.g. one or more sealing structures, in the highly vulcanized elastomer material 3. In Fig. 3d, the three-dimensional structures **11** are line-shaped but alternatively can be of any other geometry, e.g. annular or closed to form the outer or inner sealing structure 3, 4 shown in Figs 1 and 2.

Optionally, before compression molding, the geometry of the material sandwich 7 can be shaped by punching, stamping, cutting, forming, pressing or deep drawing the material sandwich 7, e.g. to form an outer contour **11** or an inner contour **12** as shown in Figs. 1 and 2.

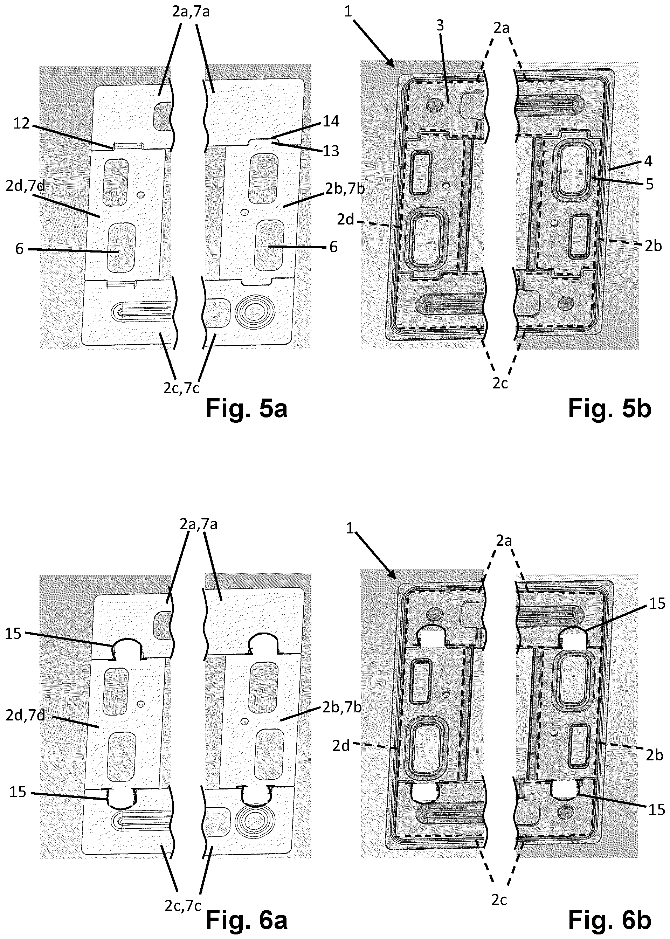

**Fig. 5a** shows a top view of a plurality (here four) of flat material sandwiches **7a-7d** arranged side by side to form a frame. The flat material sandwiches 7a-7d have each a carrier sheet **2a-2d** which is sandwiches between two slightly vulcanized elastomer layers with the upper slightly vulcanized elastomer layer being not shown and the lower slightly vulcanized elastomer layer being hidden by the carrier sheet. Optionally, the material sandwiches have openings 6 which can be punched or cut into the material sandwich. Preferably, the material sandwiches 7a-7d engages each other with a protrusion **13** of one material sandwich reaching into a recess **14** of the other material sandwich. The material sandwiches 7 are arranged in the mold 9 with the carrier sheets 2a-2d being slightly spaced apart from each other. Then, the material sandwiches 7 are compression-molded in the mold 9 which has a mold cavity 10 corresponding to the shape of the seal 1 to be produced, by applying heat and pressure to the two slightly vulcanized elastomer layers to allow the elastomer material to flow and fill the mold cavity 10. As a result, the carrier sheets 2a-2d are connected to each other by means of the elastomer material, and the grade of vulcanization of the elastomer material is increased to a higher degree in order to obtain the highly vulcanized elastomer material 3. In the frame-shaped compression-molded seal 1 shown in **Fig. 5b****,** the carrier sheets 2a-2d are fully covered by the highly vulcanized elastomer material 3 to provide a stable seal. The highly vulcanized elastomer material 3 is formed with an annular or closed outer sealing structure 4 extending along the outer circumferential edge 11 of the elastomer seal 1 and with a plurality of inner sealing structures 5 each extending e.g. along the inner circumferential edge 12 of the openings 6.

The flat material sandwiches 7a-7d shown in Fig. **6a** differs from the flat material sandwiches of Fig. 5a only in that the material sandwiches 7a-7d are connected to each other by a form-fitting connection 13, here by a puzzle-shaped connection. Accordingly, the frame-shaped compression-molded seal 1 shown in **Fig. 6b** is more stable than the seal of Fig. 5b.

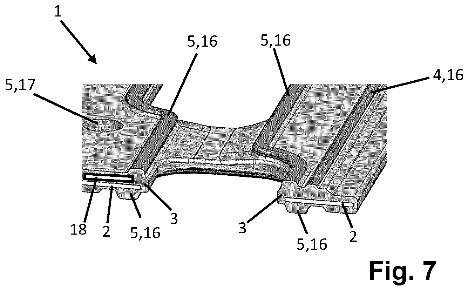

As shown in **Fig. 7****,** the 3D sealing structures 4, 5 of the flat elastomer seal 1 can either be sealing protrusions **16** or sealing recesses **17** relatively to the "main surface" of the highly vulcanized elastomer material 3. The elastomer seal 1 can further have an additional part (e.g. membrane, structural frame, metal insert etc.) **18** which was arranged in the mold 9 before the compression.

## Claims

1. Method for producing a flat elastomer seal (1) having a carrier sheet (2; 2a-2d) which is covered by highly vulcanized elastomer material (3) on at least one side, comprising the following steps:
- providing at least one flat material sandwich (7) formed by a carrier sheet (2; 2a-2d) and at least one slightly vulcanized elastomer layer (8; 8a, 8b) attached to at least one side of the carrier sheet (2), in particular two slightly vulcanized elastomer layers (8a, 8b) each attached to one of the two sides of the carrier sheet (2; 2a-2d); and
- compression molding of the material sandwich (7) in a mold (9) which has a mold cavity (10) corresponding to the shape of the seal (1) to be produced, by applying heat (T) and pressure (p) to the at least one slightly vulcanized elastomer layer (8; 8a, 8b) to allow the elastomer material to flow and fill the mold cavity (10) and to increase the vulcanization of the elastomer material to a higher degree in order to obtain a highly vulcanized elastomer material (3).

2. Method according to claim 1, wherein the carrier sheet (2; 2a-2d) comprises metal, plastics, fabrics, composites, a combination thereof or any other material, which acts as structural and mechanical carrier for elastomer layer(s).

3. Method according to claim 1 or 2, wherein the elastomer material of the at least one slightly vulcanized elastomer layer (8; 8a, 8b) is vulcanized only to a degree of less than 20%, in particular less than 10%, and wherein the highly vulcanized elastomer material (3) is vulcanized to a degree of more than 50%, in particular more than 80%.

4. Method according to one of the preceding claims, wherein the thickness of the at least one slightly vulcanized elastomer layer (8; 8a, 8b) is chosen such that the amount of slightly vulcanized elastomer material corresponds to the amount of the highly vulcanized elastomer material (3) of the compression-molded seal (1).

5. Method according to one of the preceding claims, wherein, before compression molding, the geometry of the material sandwich (7), in particular an outer contour (11) and/or an inner contour (12), is shaped, e.g. by punching, stamping, cutting, forming, pressing or deep drawing the material sandwich (7).

6. Method according to one of the preceding claims, wherein compression molding comprises forming at least one three-dimensional structure (4, 5, 11), in particular at least one sealing structure (4, 5), in the elastomer material.

7. Method according to one of the preceding claims, further comprising:
- arranging at least two flat material sandwiches (7a-7d) next to each other in the mold (9) with their carrier sheets (2a-2d) being in direct contact with each other or spaced apart from each,
- compression molding of the at least two flat material sandwiches (7a-7d) in the mold (9) by applying heat (T) and pressure (p) to the slightly vulcanized elastomer layers (8; 8a, 8b) of the at least two flat material sandwiches (7a-7d) to allow the elastomer material to flow and fill the mold cavity (10), thereby connecting the carrier sheets (2a-2d) to each other by means of elastomer material, and to further increase the vulcanization of the elastomer material to a higher grade in order to obtain the highly vulcanized elastomer material (3).

8. Method according to claim 7, wherein the carrier sheets (2a-2d) of the at least two flat material sandwiches (7a-7d) are arranged in the mold (9) engaging each other, in particular by means of a form-fitting connection (15).

9. Method according to one of the preceding claims, wherein, after compression molding, the carrier sheet(s) (2; 2a-2d) is (are) fully covered by the highly vulcanized elastomer material (3).

10. Method according to one of the preceding claims, wherein the compression-molded seal (1) is further heated outside of the mold (9) to further increase the grade of vulcanization of the highly vulcanized elastomer material (3).

11. Method according to one of the preceding claims, further comprising:
- adding or injecting slightly vulcanized or unvulcanized elastomer material to the mold (9), e.g. for connecting least two flat material sandwiches (7a-7d) to each other and/or for forming at least one sealing structure (4, 5) in the elastomer material, and/or
- arranging additional parts (18) of the flat elastomer seal (1) to be produced, in the mold (9) for connecting to the material sandwich(es) (7; 7a-7d) during the compression molding.

12. Flat elastomer seal (1) produced by the method according to one of the preceding claims.

13. Flat elastomer seal (1) according to claim 12, wherein the highly vulcanized elastomer material (3) comprises at least one three-dimensional structure (4, 5, 11), in particular at least one sealing structure (4, 5).

14. Flat elastomer seal (1) according to claim 12 or 13, wherein the seal (1) comprises at least two carrier sheets (2a-2d) next to each other which are in direct contact with each other or spaced apart from each and which are connected to each other by means of the highly vulcanized elastomer material (3).

15. Flat elastomer seal (1) according to claim 14, wherein the carrier sheets (2a-2d) engage each other, in particular by means of a form-fitting connection (15).

## Amended claims

### Amended claims in accordance with Rule 137(2) EPC.

1. Method for producing a flat elastomer seal (1) having a carrier sheet (2; 2a-2d) which is covered by highly vulcanized elastomer material (3) on at least one side, comprising the following steps:
- providing at least one flat material sandwich (7) formed by a carrier sheet (2; 2a-2d) and at least one slightly vulcanized elastomer layer (8; 8a, 8b) attached to at least one side of the carrier sheet (2), in particular two slightly vulcanized elastomer layers (8a, 8b) each attached to one of the two sides of the carrier sheet (2; 2a-2d); and
- compression molding of the material sandwich (7) in a mold (9) which has a mold cavity (10) corresponding to the shape of the seal (1) to be produced, by applying heat (T) and pressure (p) to the at least one slightly vulcanized elastomer layer (8; 8a, 8b) to allow the elastomer material to flow and fill the mold cavity (10) and to increase the vulcanization of the elastomer material to a higher degree in order to obtain a highly vulcanized elastomer material (3),
wherein the elastomer material of the at least one slightly vulcanized elastomer layer (8; 8a, 8b) is vulcanized only to a degree of less than 20% and the highly vulcanized elastomer material (3) is vulcanized to a degree of more than 50%.

2. Method according to claim 1, wherein the carrier sheet (2; 2a-2d) comprises metal, plastics, fabrics, composites, a combination thereof or any other material, which acts as structural and mechanical carrier for elastomer layer(s).

3. Method according to claim 1 or 2, wherein the elastomer material of the at least one slightly vulcanized elastomer layer (8; 8a, 8b) is vulcanized only to a degree of less than 10%, and wherein the highly vulcanized elastomer material (3) is vulcanized to a degree of more than 80%.

4. Method according to one of the preceding claims, wherein the thickness of the at least one slightly vulcanized elastomer layer (8; 8a, 8b) is chosen such that the amount of slightly vulcanized elastomer material corresponds to the amount of the highly vulcanized elastomer material (3) of the compression-molded seal (1).

5. Method according to one of the preceding claims, wherein, before compression molding, the geometry of the material sandwich (7), in particular an outer contour (11) and/or an inner contour (12), is shaped, e.g. by punching, stamping, cutting, forming, pressing or deep drawing the material sandwich (7).

6. Method according to one of the preceding claims, wherein compression molding comprises forming at least one three-dimensional structure (4, 5, 11), in particular at least one sealing structure (4, 5), in the elastomer material.

7. Method according to one of the preceding claims, further comprising:
- arranging at least two flat material sandwiches (7a-7d) next to each other in the mold (9) with their carrier sheets (2a-2d) being in direct contact with each other or spaced apart from each,
- compression molding of the at least two flat material sandwiches (7a-7d) in the mold (9) by applying heat (T) and pressure (p) to the slightly vulcanized elastomer layers (8; 8a, 8b) of the at least two flat material sandwiches (7a-7d) to allow the elastomer material to flow and fill the mold cavity (10), thereby connecting the carrier sheets (2a-2d) to each other by means of elastomer material, and to further increase the vulcanization of the elastomer material to a higher grade in order to obtain the highly vulcanized elastomer material (3).

8. Method according to claim 7, wherein the carrier sheets (2a-2d) of the at least two flat material sandwiches (7a-7d) are arranged in the mold (9) engaging each other, in particular by means of a form-fitting connection (15).

9. Method according to one of the preceding claims, wherein, after compression molding, the carrier sheet(s) (2; 2a-2d) is (are) fully covered by the highly vulcanized elastomer material (3).

10. Method according to one of the preceding claims, wherein the compression-molded seal (1) is further heated outside of the mold (9) to further increase the grade of vulcanization of the highly vulcanized elastomer material (3).

11. Method according to one of the preceding claims, further comprising:
- adding or injecting slightly vulcanized or unvulcanized elastomer material to the mold (9), e.g. for connecting least two flat material sandwiches (7a-7d) to each other and/or for forming at least one sealing structure (4, 5) in the elastomer material, and/or
- arranging additional parts (18) of the flat elastomer seal (1) to be produced, in the mold (9) for connecting to the material sandwich(es) (7; 7a-7d) during the compression molding.

12. Flat elastomer seal (1) produced by the method according to one of the preceding claims.

13. Flat elastomer seal (1) according to claim 12, wherein the highly vulcanized elastomer material (3) comprises at least one three-dimensional structure (4, 5, 11), in particular at least one sealing structure (4, 5).

14. Flat elastomer seal (1) according to claim 12 or 13, wherein the seal (1) comprises at least two carrier sheets (2a-2d) next to each other which are in direct contact with each other or spaced apart from each and which are connected to each other by means of the highly vulcanized elastomer material (3).

15. Flat elastomer seal (1) according to claim 14, wherein the carrier sheets (2a-2d) engage each other, in particular by means of a form-fitting connection (15).
